# EUROPEAN PATENT APPLICATION

(11) **EP 4 506 127 A1**
(43) Date of publication of application: **12.02.2025**
(21) Application number: 23189956.8
(22) Date of filing: 07.08.2023
(51) Int. Cl.: B27C 5/10

(54) **A ROUTER AND SUB-BASE ADAPTER THEREFOR**

(71) Applicant: Black & Decker Inc., New Britain, CT 06053 (US)
(72) Inventor: LAUER, Arthur, 60327 Frankfurt am Main (DE); ARICH, Klaus-Dieter, 65510 Hünstetten-Beuerbach (DE)
(74) Representative: SBD IPAdmin

(57) **Abstract**

A router comprises a housing and a motor mounted in the housing and operatively connected to a tool holder arranged to hold a cutting tool bit. The housing comprises a base portion. A sub-base is mountable to the base portion and the sub-base comprises a sub-base adapter configured to receive a first guide bushing and a second guide bushing wherein the first guide bushing is a different type from the second guide bushing.

## Description

### Field

The present disclosure relates to a power tool. In particular, the present disclosure relates to routers.

### Background

A power tool such as a router may be utilized by tradesmen, craftsmen, hobbyists and other users to perform various tasks. For instance, a router may be used to perform intricate cutting projects, such as decorative profiles and trimming laminates on the edges or perimeters of a workpiece. A router also may be utilized to form grooved areas in woodworking and other material as well as to remove excess material on workpieces. Routers may utilize various types of cutting tools or router bits in order to perform these and other types of tasks.

A guide bushing may be used to guide a cutting bit of a router to aid precisely shaping the desired profiles in a workpiece. Guide bushings are typically mounted on a base portion and are designed to follow templates or guides of various shapes, enabling the cutting bits to be steered through predetermined paths. Various guide bushings come in different shapes, sizes, and designs, tailored for specific use cases and materials.

Existing routers available in the prior art are often designed to accommodate only a single type of guide bushing. For example, US 7,089,978 discloses bayonet fitting for a guide bushing, EP 3 192 624 discloses clips mounted on the base of the router to engage a guide bushing and WO 2004/030878 discloses a guide bushing which is mounted to the base of the router. As a result, users requiring different types of guide bushings either have to purchase multiple routers or sub-base adapters, each configured for a specific type of guide bushing, leading to an increase in costs and inefficient utilization of resources.

Furthermore, there was a need to constantly replace or reconfigure the router's base portion, making it cumbersome and time-consuming for users to work with different guide bushings. In some cases, users had to resort to makeshift solutions such as drilling new holes in the router's base portion, which may not be feasible for all users and can potentially compromise the router's stability, leading to uneven cuts or damage to the router and workpiece.

### Summary

Examples of the present disclosure aim to address the aforementioned problems.

According to an aspect of the present disclosure there is a router comprising: a housing; a motor mounted in the housing and operatively connected to a tool holder arranged to hold a cutting tool bit; wherein the housing comprises a base portion; and a sub-base mountable to the base portion, the sub-base comprising a sub-base adapter configured to receive a first guide bushing and a second guide bushing wherein the first guide bushing is a different type from the second guide bushing.

Optionally, the router comprises a first bushing mounting arrangement arranged to mount the first guide bushing to the base portion.

Optionally, the router comprises a second bushing mounting arrangement arranged to mount the second guide bushing to the base portion.

Optionally, the first and second bushing mounting arrangements are different.

Optionally, the first bushing mounting arrangement is at a first position on the sub-base adapter and the second bushing mounting arrangement is at a second position on the sub-base adapter.

Optionally, the first bushing mounting arrangement comprises clamping the sub-base adapter between a bushing locking ring engageable with a protruding portion of the first guide bushing projecting through the sub-base adapter.

Optionally, the first bushing mounting arrangement comprises a first bushing recess on a first side of the sub-base adapter configured to receive the bushing locking ring and a second bushing recess on a second side of the sub-base adapter configured to receive a portion of the first guide bushing.

Optionally, the second bushing recess is configured to receive a radially protruding shoulder portion of the first guide bushing.

Optionally, the second bushing mounting arrangement comprises at least one bushing fastener hole in the sub-base adapter wherein the at least one bushing fastener hole is configured to receive at least one bushing screw fastener when the second guide bushing is mounted to the router.

Optionally, a second bushing recess on the second side of the sub-base adapter is configured to receive at least a portion of the second guide bushing and a head portion of the at least one bushing screw fastener when the at least one bushing screw is inserted into the at least one bushing fastener hole.

Optionally, the at least a portion of the second guide bushing is a radially projecting flange portion of the second guide bushing.

Optionally, the radially projecting flange portion of the second guide bushing is flush with a workpiece facing surface of the sub-base adapter.

Optionally, the at least one fastener hole is configured to receive the at least one bushing screw fastener when the second guide bushing is not mounted to the router.

Optionally, the sub-base adapter is removeably mountable to the base portion.

Optionally, the sub-base adapter is mountable to the base portion with a plurality of screw fasteners.

Optionally, the first guide bushing and the second guide bushing comprise different heights in a direction along a longitudinal axis of the router when mounted on the router.

In another aspect of the disclosure there is provided, a router assembly comprising a router according to the previous aspect and a first guide bushing and a second guide bushing.

In yest another aspect of the disclosure, there is provided sub-base mountable to the base portion of a housing of a router, the sub-base comprising a sub-base adapter comprising a first mounting arrangement configured to receive a first guide bushing and a second mounting arrangement configured to receive second guide bushing wherein the first guide bushing is a different type from the second guide bushing.

### Brief Description of the Drawings

Various other aspects and further examples are also described in the following detailed description and in the attached claims with reference to the accompanying drawings, in which:
Figure 1 shows a front view of the router according to an example;
Figures 2a and 2b show a close-up perspective view of a base portion and a sub-base adapter according to an example;
Figure 3a and 3b show cross-sectional side views of a base portion and a sub-base adapter according to an example;
Figure 4 shows a perspective exploded view of a close-up of the sub-base adapter and the base portion according to an example;
Figures 5a and 5b respectively show a sub-base adapter and a standard sub-base according to an example;
Figure 5c shows a sub-base adapter and a collecting accessory mounted thereon according to an example;
Figures 6a and 6b show a close-up perspective view of the base portion with a chip collector accessory according to an example;
Figure 7 shows a side view of the base portion according to an example;
Figure 8 shows a side cross-sectional view of the router according to an example;

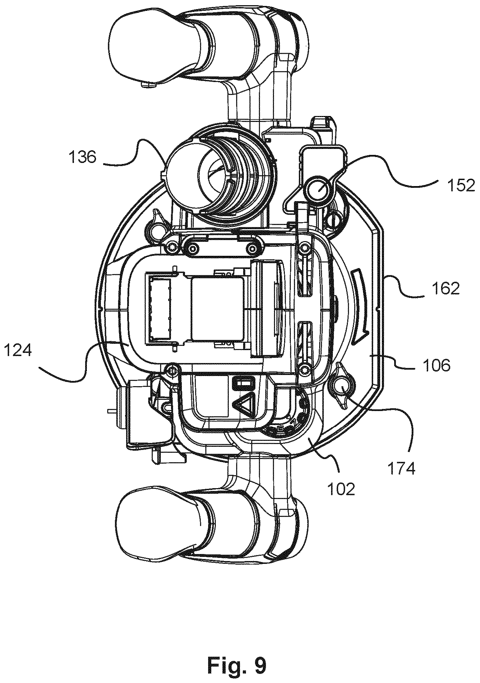

Figure 9 shows plan view of the router according to an example;
Figure 10 shows a side view of the router according to an example;
Figure 11 shows another perspective view of a router according to an example;
Figure 12 shows an exploded perspective view of the base portion according to an example;
Figure 13 shows an exploded perspective view of the router according to an example;

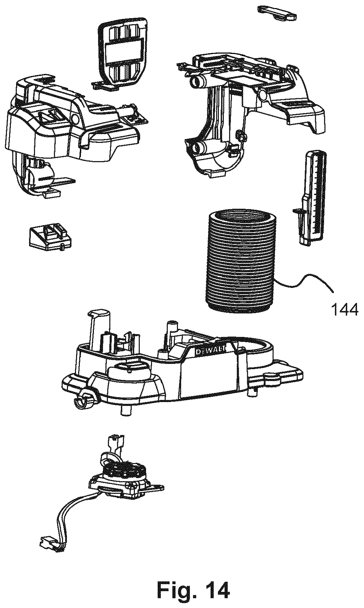

Figure 14 shows an exploded perspective view of the top portion of the router.

### Detailed Description

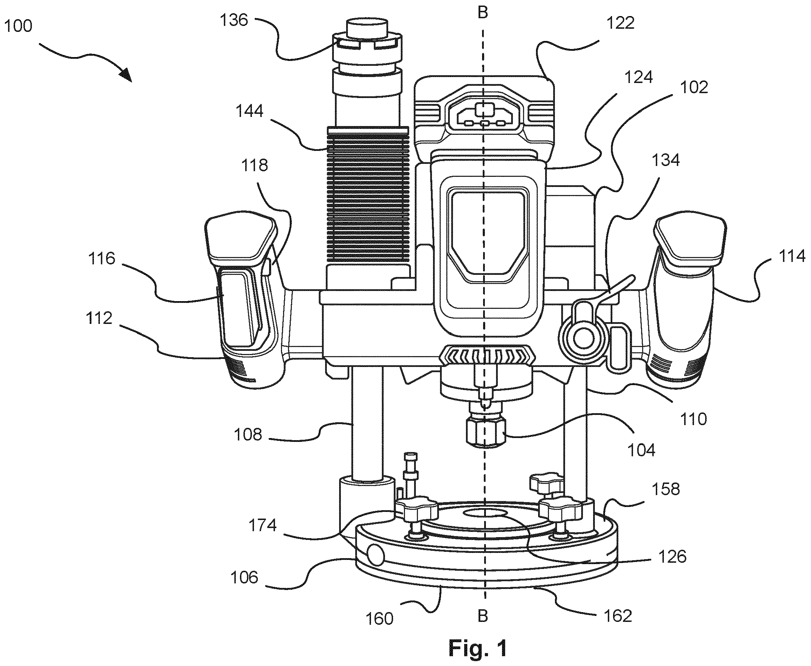

Figure 1 shows a front view of a power tool 100 according to an example. The power tool 100 as shown in Figure 1 is a router 100. Hereinafter, the power tool 100 will be referred to as a router 100, but in other examples any other type of power tool can be used such as a plunge saw, a drill, a multitool, or an oscillating tool mounted on a plunge base portion 106.

The router 100 comprises a housing 102. The housing 102 comprises a clam shell type construction having two halves which are fastened together. The halves of the housing 102 are fastened together with screws but in alternative examples any suitable means for fastening the housing 102 together may be used such as glue, clips, bolts and so on. For the purposes of clarity, the fastenings in the housing 102 are not shown.

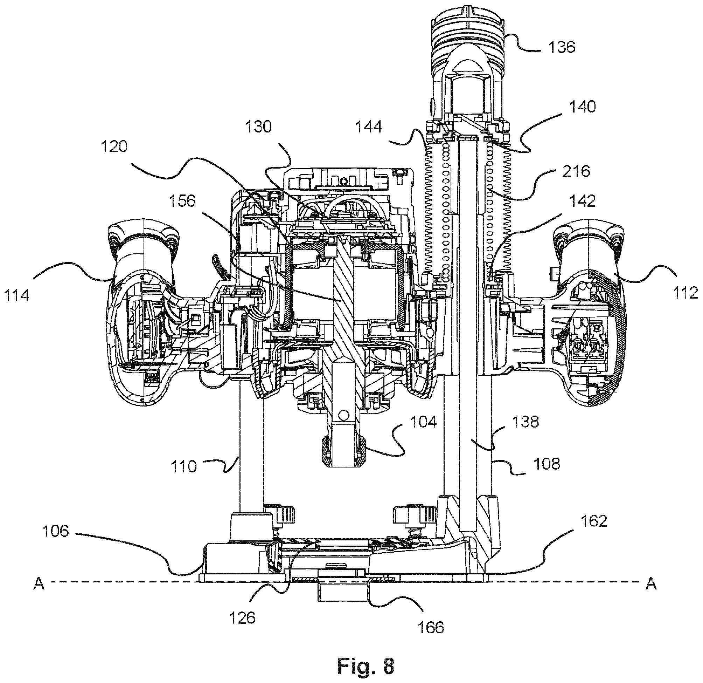

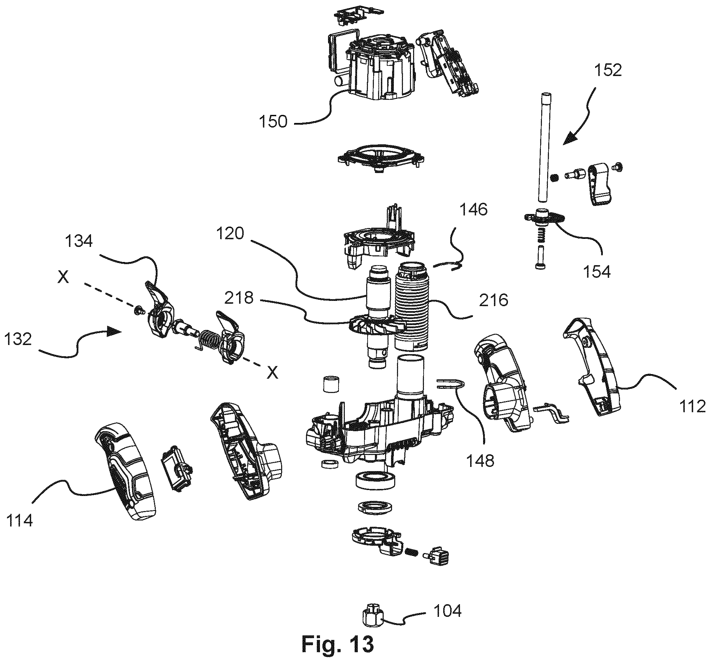

A motor 120 (best shown in Figure 8) is mounted in the housing 102 for driving a collet 104. The motor 120 is optionally mounted within a motor housing 150 (best shown in Figure 13). The motor housing 150 may be mounted to the housing 102. The motor 120 may be any suitable type of electric motor, such as a brushed or brushless DC motor, an AC motor, a stepper motor, or other types of motors known in the art. Optionally, the motor housing 150 is mounted to the housing 102 via dampeners e.g. rubber mounts (not shown) to reduce the vibration transmitted from the motor 120 to the housing 102 and, in turn, to the user.

The motor 120 is operatively connected to the collet 104 through a drive shaft 156, which transmits the rotational movement of the motor 120 directly to the tool holder e.g. the collet 104. The drive shaft 156 may comprise one or more bearings to decrease friction and ensure smooth rotation of the collet 104.

The motor 120 may comprise various cooling components, such as fans or cooling fins, to dissipate heat generated during operation. One such fan 218 is shown in Figure 13. These cooling components may be encased within the motor housing 150 or the housing 102 of the router 100 and may be integrated into the design of the motor 120 itself.

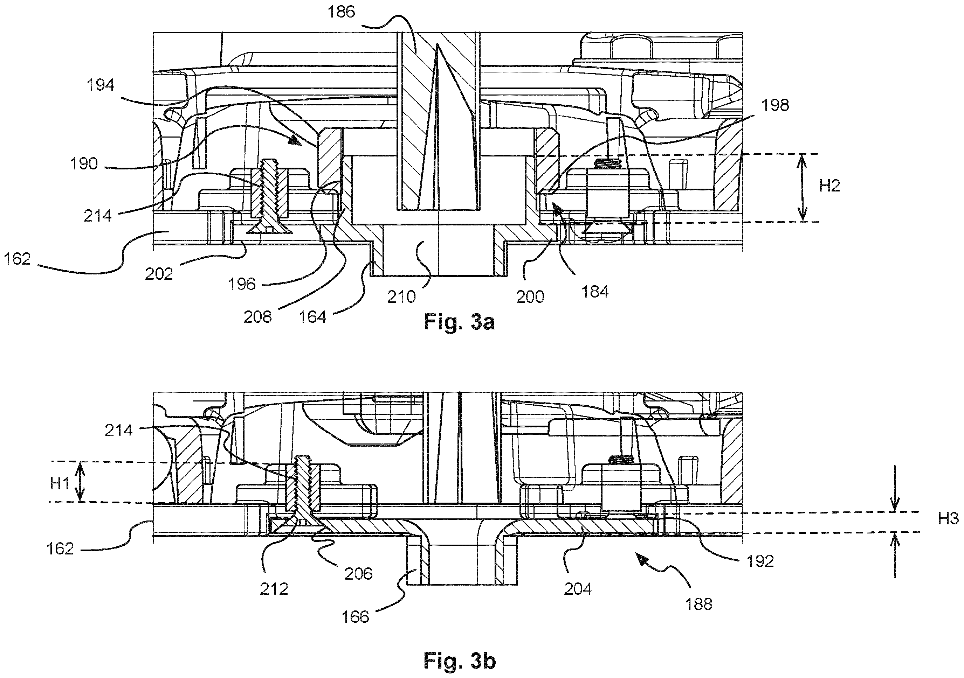

A cutting tool bit 186 (partially shown in Figure 3a) can be mounted in the collet 104 for engaging a workpiece (not shown). Typically, the cutting tool is a cutting tool bit 186 for a router 100. In some examples the cutting tool bit 186 is a router bit such as an upcut spiral router bit, a downcut spiral router bit, a straight router bit, a cove router bit, a chamfer router bit, a rabbeting router bit, a roundover router bit, a beading router bit, an ogee router bit or a panel raising router bit. Any other suitable router cutting tool bit 186 can be mounted in the collet 104.

The collet 104 may be a cylindrical component that contains an inner bore to accommodate and grip the shank of the cutting tool bit 186. The collet 104 is known and will not be discussed in any further detail.

As shown in Figure 1, the router 100 comprises a base portion 106 for engaging the workpiece. The base portion 106 comprises a base aperture 126 through which the cutting tool bit 186 can project e.g. when the user plunges the housing 102 towards the base portion 106 and then the cutting tool bit 186 projects through the base aperture 126. The base portion 106 is mounted to the housing 102 via first and second guide posts 108, 110. The first and second guide posts 108, 110 are slidably mounted to the housing 102 for adjusting the relative distance of the base portion 106 from the collet 104. In some examples, the first and second guide posts 108, 110 are removable. This means that the router 100 can be used without the base portion 106 engaging the workpiece.

The housing 102 comprises a first handle 112 and a second handle 114 for the user to grip during operation. The first handle 112 comprises a main trigger switch 116 for operating the router 100. In some examples, the first handle 112 also comprises a lock button 118 for selectively locking the main trigger switch 116 into an "ON" status. This means that the user does not have to constantly keep pressure maintained on the main trigger switch 116 during operation of the router 100. In some examples, the main trigger switch 116 can be replaced with a momentary switch (not shown).

The user can hold both the first handle 112 and the second handle 114 to grip the router 100 during operation thereof. The first handle 112 and the second handle 114 optionally comprise a clam shell arrangement as shown in Figure 13.

The motor 120 is electrically connected to an electric power source. In some examples, the electric power source is a mains electrical supply. In some other examples, the electrical power source is a battery 122. The battery 122 can be removeably mountable to the housing 102 or integral to the housing 102. In some examples, the router 100 can be powered either from both a battery 122 and / or a mains electrical supply. The motor 120 is connected to a controller 130 (best shown in Figure 8) mounted on a PCB in the housing 102. The controller 130 is configured to issue control instructions to the motor 120 in dependence of the user actuating the main trigger switch 116.

The battery 122 as shown in Figure 1 is securely mounted to a top portion 124 of the housing 102. The battery 122 is configured to power the motor 120 and other electronic components. The battery 122 may comprise lithium-ion cells, nickel-metal hydride cells, or any other type of rechargeable or non-rechargeable power source.

The router 100 as shown in Figure 1 is optionally a plunge router 100. However, in some examples, the router 100 is not a plunge router 100. Accordingly, the router 100 can be selectively operated in different modes. In a first mode, the router 100 is in a locked position. In the locked position, the first and second guide posts 108, 110 are fixed with respect to the housing 102. This means that the housing 102 and the collet 104 are fixed with respect to the base portion 106. Accordingly, the cutting tool (not shown) can be maintained at a set height above the workpiece. This means that the user of the router 100 can select how far the cutting tool projects through the aperture in the base portion 106.

In a second mode, the router 100 is in an unlocked position. In the unlocked position the first and second guide posts 108, 110 are slidable with respect to the housing 102.

This means that the user can push down on the first and second handles 112, 114 and the first and second guide posts 108, 110 slide into or through the housing 102. In this way, the distance between the base portion 106 and the housing 102 can be adjusted. This means that the user can position the router 100 above the workpiece and then push the housing 102 towards the workpiece and the cutting tool plunges into the workpiece.

As discussed hereinafter, the router 100 is configured to be set in a plurality of unlocked positions for different operation modes of the router 100.

The user can select between the locked and unlocked position of the router 100 by using a locking system 132 (best shown in Figure 13) mounted on the router 100. In some examples, the locking system 132 is actuatable with a locking lever 134.

Figure 1 shows the locking lever 134 in a locked position. In some examples, the locking lever 134 is in the locked position in a vertical orientation. The locking lever 134 is mechanically coupled to the first and / or second guide posts 108, 110 such that relative movement of the first and second guide posts 108, 110 is prevented when the locking lever 134 is in the locked position.

In some examples, the locking lever 134 actuates a locking bolt (not shown) to engage the first guide post 108 or the second guide post 110. In this way, the locking bolt exerts a frictional force against the first or second guide posts 108, 110 when the locking lever 134 is in the locked position. Alternatively, the locking bolt can engage a detent or a hole in the first guide post 108 or the second guide post 110.

Accordingly, when the locking lever 134 is in the locked position the locking bolt clamps against or engages the first or second guide posts 108, 110 preventing relative movement therebetween. In some examples the locking lever 134 optionally engages a reciprocal hole or detent (not shown) in the second guide post 110 and the housing 102. In other examples, an additional second locking bolt (not shown) is used to also engage with the first guide post 108 such that both the first and the second guide posts 108, 110 are locked at the same time. In other examples, other mechanisms can be used to lock the first and second guide posts 108, 110 such as a latch-catch mechanism, a ball bearing engaging a detent in the first and second guide posts 108, 110 or any other suitable mechanism.

The locking lever 134 is moveable between the locked position shown in Figure 1 and an unlocked position (not shown). In some examples, the locking lever 134 is rotatable between the locked position and the unlocked position about a rotational axis X-X of the locking lever 134 (as shown in Figure 13). In some other examples, the locking lever 134 is slidable between the locked position and the first and second unlocked positions. Mechanical linkages (not shown) may be coupled between the locking lever 134 and the locking bolt for actuating engagement between the locking bolt and the first and second guide posts 108, 110.

When the user plunges the housing 102 towards the base portion 106, the collet 104 and the cutting tool project through the base aperture 126. A housing return spring 216 is optionally shown in Figure 8 as is fixed with respect to the first guide post 108 at a first spring end 140 and connected to the housing 102 at a second spring end 142. In some examples the housing return spring 216 is fixed with respect to the first guide post 108 at a first spring end 140 with a first C-clip 146 and fixed with respect to the housing 102 at a second spring end 142 with a second C-clip 148. Other types of fastener can be used instead of the first and second c-clips 146, 148. Accordingly, when the housing 102 is moved towards, the base portion 106, the housing return spring 216 extends and exerts a return force on the housing 102 to return the unplunged position (e.g. the router 100 as shown in Figure 1). The housing return spring 216 is shrouded with a bellows 144 to prevent ingress of dirt, debris or moisture into the housing return spring 216 or other parts of the router 100.

In order to adjust the depth of the plunge e.g. how far the collet 104 projects through the base aperture 126, the housing 102 comprises a depth rod 152. The depth rod 152 is configured to engage one or more depth screws 154 of a plunge depth stop mounted on the base portion 106. When the housing 102 is plunged towards the base portion 106, the housing 102 is prevented from moving further towards the base portion 106 when the depth rod 152 engages the depth screws 154 of the plunge depth stop. The amount the depth rod 152 extends towards the base portion 106 is adjustable by the user. Furthermore, the amount the depth screws 154 project towards the housing 102 from the base portion 106 are also adjustable by the user. For the purposes of clarity only one of the depth screws 154 are labelled. The plunge depth stop, the depth screws 154 and the depth rod 152 are known and will not be described in any further detail.

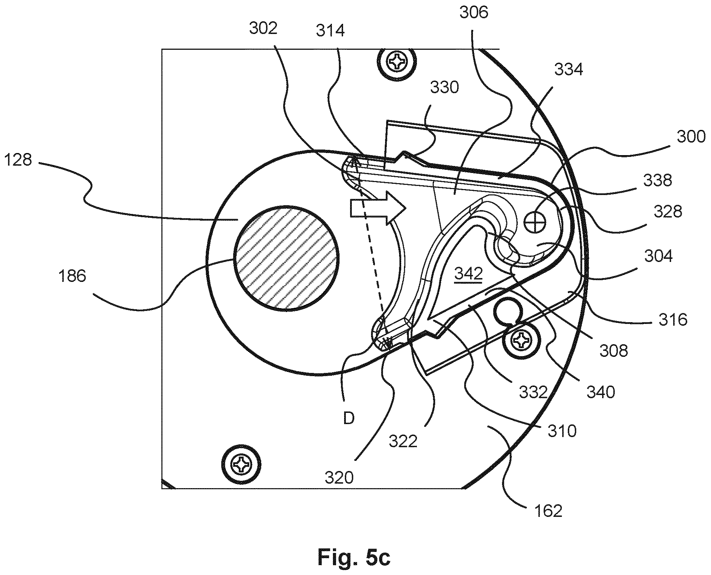

Turning back to Figure 1, the router 100 comprises a dust extraction conduit 136. The dust extraction conduit 136 is connectable to a vacuum source such as a workshop vacuum. The first guide post 108 is hollow and comprises a first guide post conduit 138 which is in fluid communication with the dust extraction conduit 136 at a first end of the first guide post 108. The second end of the first guide post 108 is in fluid communication with the base portion 106 and the cutting tool. In this way, the first guide post conduit 138 couples the vacuum source via the dust extraction conduit 136 to the base portion 106. This means cutting chips and other debris from the workpiece can be collected and extracted during operation. The collection of the chips will be described in more detail below in reference to Figures 5c, 6a, 6b and 7.

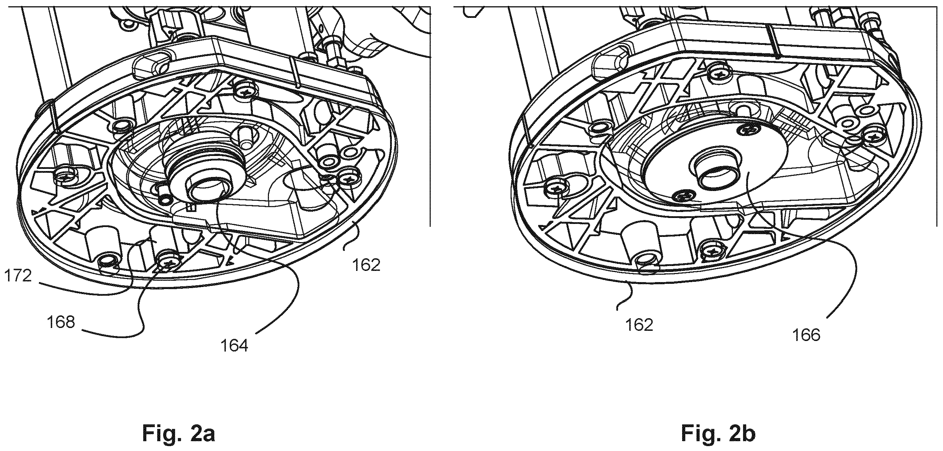

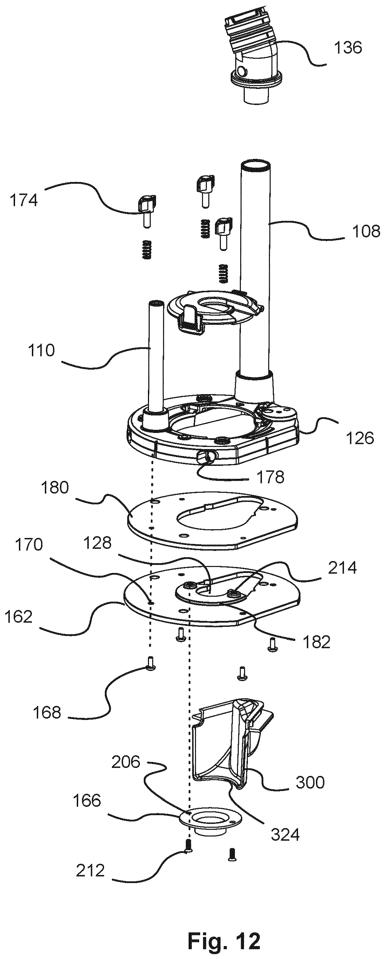

The base portion 106 will now be described in more detail with reference to Figures 2a, 2b, 3a, 3b and 12. Figures 2a and 2b show a close-up perspective view of a base portion 106 and a sub-base adapter 162. Figure 3a and 3b show cross-sectional side views of the base portion 106 and the sub-base adapter 162. Figure 12 shows an exploded perspective view of the base portion 106.

The base portion 106 provides a stable and flat surface in a plane parallel with axis A-A (as shown in Figure 8). The base portion 106 is arranged to be positioned and secured against the workpiece during operation of the router 100. The base portion 106 may comprise a first base side 158 facing away from the workpiece, and a second base side 160 facing towards the workpiece. The base portion 106 may be formed from any suitable material such as metal, plastic, composite, or any combination thereof. The dimensions and geometrical features of the base portion 106 may be configured to ensure proper compatibility with a variety of accessories, as discussed below.

The base portion 106 may optionally comprise a plurality of mounting features, such as holes, slots, or recesses, which enable the secure attachment of other components such as a sub-base having a sub-base adapter 162. These mounting features may be arranged in a predetermined pattern or layout, which corresponds to complementary features on the sub-base adapter 162 for proper alignment and mounting. Hereinafter, the term sub-base adapter 162 refers to the sub-base comprising the sub-base adapter 162. In some examples, the sub-base adapter 162 is integral with the sub-base. In some other examples, as mentioned below, the sub-base adapter 162 may be a separate component and is mountable on a separate sub-base component 180.

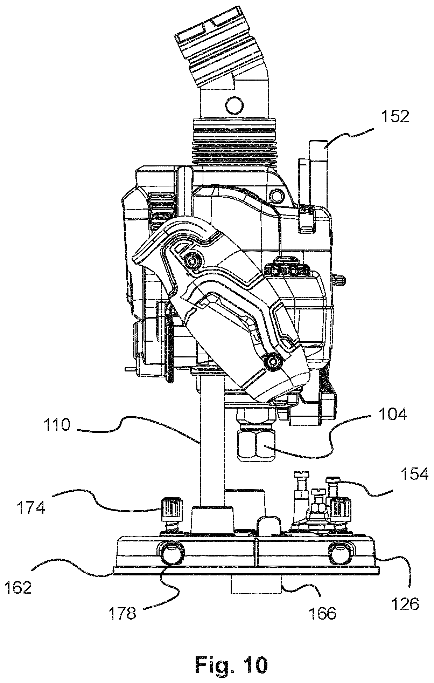

As shown in Figure 1, the base portion 106 comprises a plurality of toolless accessory fasteners 174. The toolless accessory fasteners 174 are configured to project through the base portion 106 via toolless accessory fastener holes 176. The toolless accessory fasteners 174 are configured to allow an accessory to be removably mounted on the base portion 106 or to removable mount the base portion 106 to another accessory. In some examples, the toolless accessory fasteners 174 are depressed and project through the toolless accessory fastener holes 176 and the toolless accessory fasteners 174 screw into one or more reciprocal threaded holes in an accessory e.g. a workbench. In this way, the toolless accessory fasteners 174 allow the router 100 to be mounted inverted on the underside of a workbench. In addition, the toolless accessory fasteners 174 also allow other accessories to be mounted on the base portion 106. Figure 10 shows a side view of the router 100. The base portion 106 optionally comprises accessory holes 178 configured to receive a portion of an accessory such as a fence. The fence comprises elongate rods which are inserted into the accessory holes 178 and the toolless accessory fasteners 174 are screwed and clamped against the elongate rods. The fence is then fixed with respect to the base portion 106. The toolless accessory fasteners 174 are sprung biased towards an unengaged position away from the second base side 160, when unscrewed.

Figure 1 shows three toolless accessory fasteners 174, but in some examples there can be any suitable number of toolless accessory fasteners 174 e.g. two, four, five etc.

The base portion 106 of the router 100 may be integrally formed with the housing 102 or may be a separate component that is securely attached or connected to the main body of the housing 102 as shown in the accompanying Figures. Figure 12 shows the first guide post 108 and the second guide post 110 fixed with respect to the base portion 106.

The sub-base adapter 162 will now be described in reference 2a, 2b, 3a, 3b and 12 as well. Figures 2a and 2b show the sub-base adapter 162 as see-through in order to show where the fastening locations on the base portion 106.

The sub-base adapter 162 may comprise a generally flat or substantially planar body or plate, which may be constructed from a rigid, durable material such as a metal, a plastic, a composite material, or other suitable materials. The sub-base adapter 162 may be specifically formed, shaped, and dimensioned to correspond with and be mountable to the base portion 106 of the housing 102 of the router 100. When mounted to the base portion 106, the sub-base adapter 162 may provide a stable and secure mounting platform for the various types of accessories such as guide bushings, including the first guide bushing 164 and the second guide bushing 166.

The sub-base adapter 162 is removeably mountable to the base portion 106 and Figures 2a and 2b show the sub-base adapter 162 being fixed thereto. The sub-base adapter 162 in some examples is fixed to the base portion 106 with a plurality of base fasteners 168. For the purposes of clarity, only one base fastener 168 has been labelled in the Figures. The base fasteners 168 are configured to be inserted through a base fastener hole 170 in the sub-base adapter 162 and fastened to a reciprocal base fastening mount 172 in the base portion 106. In some examples, the base fastener 168 is a screw fastener and the reciprocal base fastening mount 172 is a threaded hole integral with the base portion 106. Figures 2a and 2b show four base fasteners 168 which fix the sub-base adapter 162 to the base portion 106. However, in some other examples there can be any suitable number of base fasteners 168 e.g. two, three, five etc.

In some other examples, the sub-base adapter 162 can be mounted onto the base portion 106 with any other suitable fasteners or fastening mechanisms. For example, the sub-base adapter 162 can be mounted on the base portion 106 with a bayonet fitting, clips, clamps or any other suitable fasteners.

The sub-base adapter 162 in some examples e.g. as shown in Figures 1, 2a, 2b, 3a and 3b, is preferably mounted directly to the base portion 106. In this case the sub-base adapter 162 is part of the sub-base as mentioned above. However, in other examples, the sub-base adapter 162 can be mounted over another sub-base component 180. The sub-base component 180 is optionally mounted to the base portion 106 and the sub-base adapter 162 is then mounted against the sub-base component 180. In this way, the sub-base adapter 162 sandwiches the sub-base component 180 against the base portion 106.

The sub-base adapter 162 may comprise a plurality of mounting arrangements configured to mount different accessories to the sub-base adapter 162. In some examples, the sub-base adapter 162 is configured to receive different types of accessory. In some examples, the sub-base adapter 162 is configured to receive a first guide bushing 164 and a second guide bushing 166 wherein the first guide bushing 164 is a different type from the second guide bushing 166.

Guide bushings such as the first guide bushing 164 and the second guide bushing 166 are used with the router 100 so that the user can use a jig or template to help guide the cut in the workpiece. Different types of guide bushing are manufactured by different power tool manufacturers. Often the different power tool manufacturers have developed different proprietary guide bushings for a particular brand of routers. In some cases, different types of guide bushings from different manufacturers will have different mounting arrangements. This may mean that one type of guide bushing from one manufacturer is incompatible with another type of guide bushing from another manufacturer. This means that users may not be able to share guide bushings on a worksite if two users have different types of guide bushings. Or alternatively, a user must buy a new set of guide bushings if they change the brand of router.

In some examples, the sub-base adapter 162 comprises a first bushing mounting arrangement 184 configured to mount the first guide bushing 164 to the base portion 106. The first bushing mounting arrangement 184 is provided at a first position 190 on the sub-base adapter 162. The first bushing mounting arrangement 184 is shown in Figures 2a and 3a.

In some examples, the first bushing mounting arrangement 184 may comprise a bushing locking ring 194 which is configured to engage a portion of the first guide bushing 164. The first guide bushing 164 is mounted on the first base side 158 of the base portion 106 and the first guide bushing 164 comprises a projecting stem 196 which protrudes through the base aperture 126. The bushing locking ring 194 is screw threaded on to a threaded portion of the projecting stem 196. The bushing locking ring 194 clamps the sub-base adapter 162 between the bushing locking ring 194 and the first guide bushing 164.

The sub-base adapter 162 optionally comprises a first bushing recess 198 which may be formed and positioned on a first base side 158 of the sub-base adapter 162. The first bushing recess 198 is configured to receive and closely conform to the shape of the bushing locking ring 194 when the first guide bushing 164 is mounted to the sub-base adapter 162 when engaged to the projecting stem 196. The bushing locking ring 194 is configured to clamp or secure the first guide bushing 164 to the sub-base adapter 162, thereby providing a stable and secure mounting arrangement for the first guide bushing 164.

The first guide bushing 164 comprises a radially protruding shoulder portion 200. The radially protruding shoulder portion 200 is received in a second bushing recess 202 on a second base side 160 of the sub-base adapter 162. When the bushing locking ring 194 is threaded on the projecting stem 196, the radially protruding shoulder portion 200 is clamped against the second bushing recess 202.

The first guide bushing 164 comprises a cylindrical body 208 having internal and external surfaces, as well as proximal and distal end portions. The internal surface defines a first bushing tool bit aperture 210 through which the cutting tool bit 186 can be inserted when mounted on the router 100. The external surface may be configured to contact and slide along a workpiece for guiding and controlling the movement and positioning of the router 100 during operation. The proximal end portion may be adapted for mounting to the base portion 106 of the housing 102 via the first bushing mounting arrangement 184, while the distal end portion may project outwardly to engage with the workpiece.

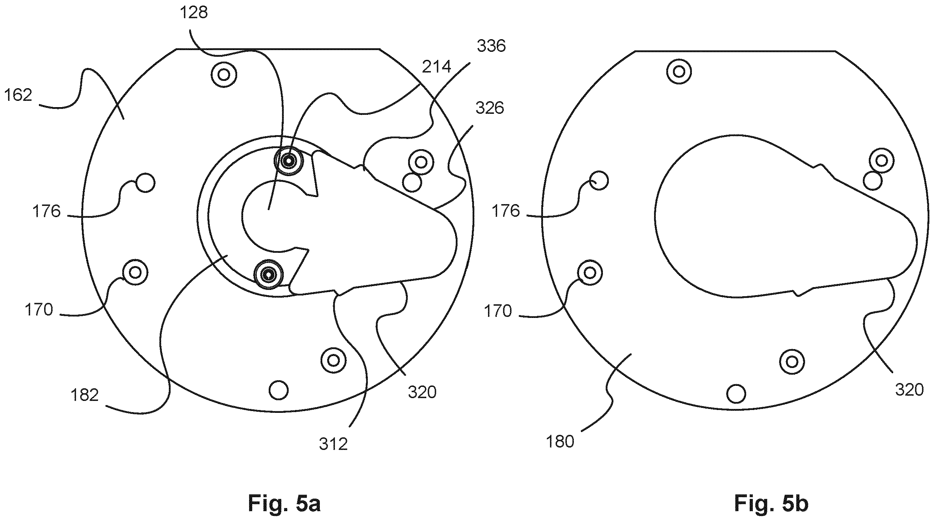

In some examples, the sub-base adapter 162 further comprises a second bushing mounting arrangement 188 configured to mount the second guide bushing 166 to the base portion 106. The second bushing mounting arrangement 188 is provided at a second position 192 on the sub-base adapter 162. The second bushing mounting arrangement 188 is shown in Figures 2b, 3b and 5a. Figure 5a shows an underneath view of the sub-base adapter 162. The second bushing mounting arrangement 188 will now be described in more detail with reference to these Figures.

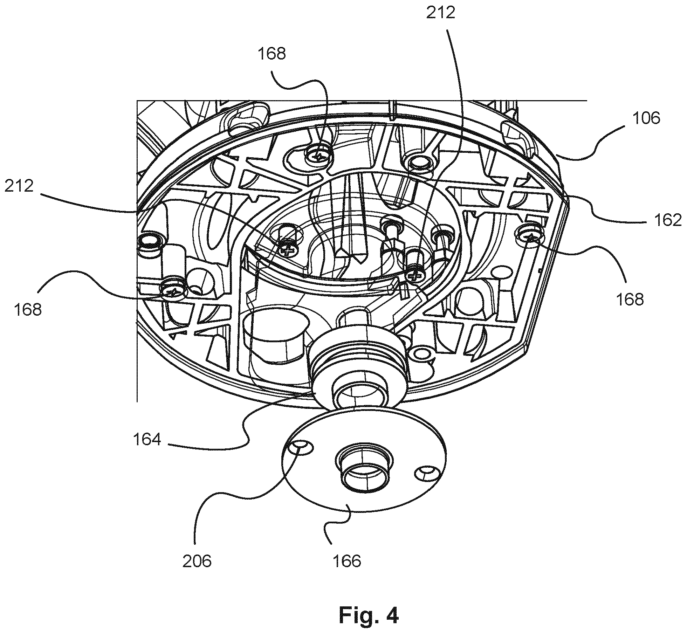

As shown in Figures 2b and 3b, the second guide bushing 166 comprises radially projecting flange portion 204 which is received in the second bushing recess 202 of the sub-base adapter 162. The radially projecting flange portion 204 comprises bushing fastener holes 206 configured to receive bushing screw fasteners 212 therethrough. As shown in Figure 4 the second guide bushing 166 comprises two bushing fastener holes 206. However, in other examples any suitable number of bushing fastener holes 206 can be provided to respectively each receive bushing screw fasteners 212 therethrough.

As mentioned above, the second bushing recess 202 is provided on the second base side 160 of the sub-base adapter 162. The second bushing mounting arrangement 188 comprises one or more bushing screw fasteners 212 which are engageable with corresponding adapter threaded holes 214 in the sub-base adapter 162. The adapter threaded holes 214 are integral with the sub-base adapter 162 and located on an adapter flange 182. The adapter flange 182 is a C-shaped flange portion which partially surrounds a sub-base adapter hole 128. The adapter flange 182 is a C-shaped flange portion so that chips ejected from the cutting tool bit 186 do not collide with the sub-base adapter 162.

The sub-base adapter hole 128 is configured to align with the base aperture 126 and receive the cutting tool bit 186 therethrough. The adapter flange 182 projects in a direction parallel with the longitudinal axis A-A of the router 100 from the sub-base adapter 162. The adapter flange 182 projects a distance H1 as shown in Figure 3b. This means that adapter threaded holes 214 can be accommodated in the sub-base adapter 162. The adapter threaded holes 214 as open holes, but in some examples the adapter threaded holes 214 can be blind holes.

However, in some other examples, the adapter threaded holes 214 are optional and the base portion 106 comprises similar threaded holes for receiving the bushing screw fasteners 212.

The second bushing recess 202 is formed and positioned on a second base side 160 of the sub-base adapter 162. The second bushing recess 202 is configured to receive and closely conform to the shape of the radially projecting flange portion 204 of the second guide bushing 166 when the second guide bushing 166 is mounted to the sub-base adapter 162. When the bushing screw fasteners 212 are inserted through the bushing fastener holes 206 and threadedly engaged with the corresponding adapter threaded holes 214 in the sub-base adapter 162 this provides a stable and secure mounting arrangement for the second guide bushing 166.

Furthermore, the sub-base adapter 162 is configured to provide flush mounting of the second guide bushing 166 when mounted to the sub-base adapter 162. Indeed, the radially projecting flange portion 204 of the second guide bushing 166 is completely received within the second bushing recess 202 is flush with the sub-base adapter 162.

As can be seen from Figure 3a, the bushing screw fasteners 212 are fastened in the corresponding adapter threaded holes 214 in the sub-base adapter 162 when the first guide bushing 164 is mounted to the sub-base adapter 162. This means that the bushing screw fasteners 212 can be conveniently stowed even if the second guide bushing 166 is not being used. This arrangement may prevent loss or misplacement of the bushing screw fasteners 212 during storage or transportation. As shown in Figure 3a, the bushing screw fasteners 212 are still received within the second bushing recess 202 and do not protrude beyond the sub-base adapter 162. This means that the bushing screw fasteners 212 do not snag on the workpiece or jig when the first guide bushing 164 is mounted to the sub-base adapter 162.

The aforementioned examples disclose the first bushing mounting arrangement 184 having a bushing locking ring 194 threadedly engaging a threaded projecting stem 196. However, in other examples, the first guide bushing 164 may comprise any other suitable mounting arrangement. For example, the first bushing mounting arrangement 184 may comprise other fastening arrangements and the first guide bushing 164 can be e.g. a bayonet fitting type bushing, a screw-on type bushing, or any other suitable type of guide bushing that can be securely mounted to the base portion 106 via the first bushing mounting arrangement 184.

The second guide bushing 166 is different from the first guide bushing 164. The second guide bushing 166 comprises a different mounting arrangement from the first guide bushing 164. The first and second guide bushings 164, 166 may be of a distinct different type when compared to each other e.g. bayonet fitting type bushing, a screw-on type bushing, a screw fastened type bushing or any other suitable type of guide bushing that can be securely mounted to the base portion 106, enabling a user to utilize guide bushings of different configurations with the router 100.

As mentioned above, the second guide bushing 166 comprises a radially projecting flange portion 204. The radially projecting flange portion 204 extends in a direction substantially orthogonal to the longitudinal axis B-B of the router 100. The second guide bushing 166 comprises a cylindrical portion configured to guide a cutting tool bit 186 during operation.

Alternatively, or in addition to the bushing screw fasteners 212, the second bushing mounting arrangement 188 may comprise other optional mechanical or friction-based fastening configurations, such as snap-fit engagements, magnetic attachments, or spring-loaded retention mechanisms, which may be suitable for securing the second guide bushing 166 to the sub-base adapter 162.

The second guide bushing 166 has a different height in a direction along the longitudinal axis B-B of the router 100 when mounted on the router 100 in comparison to the first guide bushing 164. The projecting stem 196 of the first guide bushing 164 projects through the sub-base adapter 162 by a distance H2 along the longitudinal axis A-A of the router 100. Accordingly, the first bushing mounting arrangement 184 mounts the first guide bushing 164 with a first height in the direction along the longitudinal axis A-A of the router 100. In contrast the second guide bushing 166 does not have a projecting stem. Instead, the second guide bushing 166 only projects into the second bushing recess 202 the sub-base adapter 162 by a distance H3 (e.g. the depth of the second bushing recess 202) along the longitudinal axis A-A of the router 100. Accordingly, the second bushing mounting arrangement 188 mounts the second guide bushing 166 with a second height, smaller than the first height, in the direction along the longitudinal axis A-A of the router 100. These height differences allow the router 100 to cater to various guide bushing requirements and specifications, thus enhancing the router's compatibility and adaptability.

Various other configurations and arrangements of bushing recesses and fasteners may also be possible within the scope of the disclosure. For instance, additional bushing recesses may be provided on the sub-base adapter 162 for accommodating other types of guide bushings, or different types of fasteners may be used to secure the guide bushings to the sub-base adapter 162 and/or the base portion 106. Additionally, in some examples, the bushing recesses and fasteners may be designed to accommodate more than two types of guide bushings, further increasing the versatility and adaptability of the router 100.

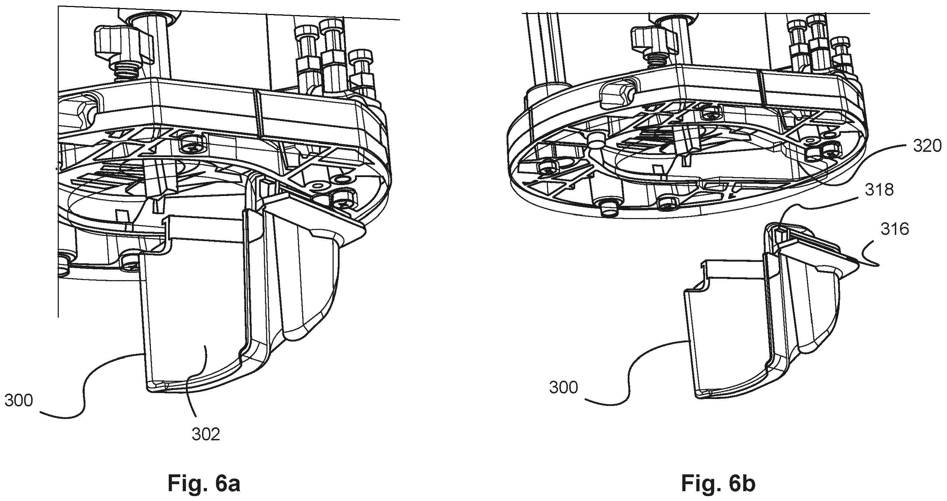

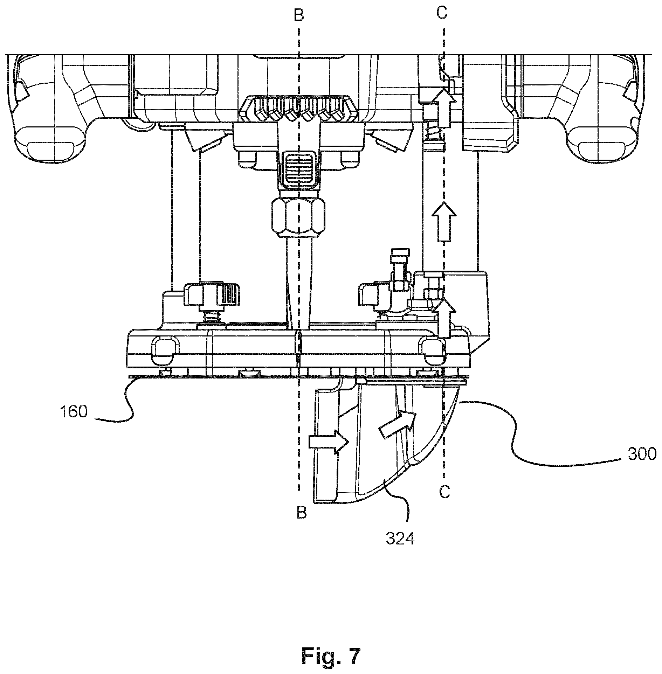

The collection of the chips will now be described in more detail below in reference to Figures 5c, 6a, 6b and 7. Figure 5c shows the sub-base adapter 162 and a chip collecting accessory 300 mounted thereon. Figures 6a and 6b show a close-up perspective view of the base portion 106 with the chip collector accessory 300. Figure 7 shows a side view of the base portion 106.

The chip collector accessory 300 is optionally removably mountable to the base portion 106 or the sub-base adapter 162. The chip collector accessory 300 is mountable to the base portion 106 around the base aperture 126 when mounted directly to the base portion 106. Alternatively, chip collector accessory 300 is mountable to the sub-base adapter 162 around the sub-base adapter hole 128.

In some alternative examples, the chip collector accessory 300 can be fixed directly to the sub-base adapter 162. In this case, the sub-base adapter 162 must be swapped with another sub-base component 180 if the user does not want to use the chip collector accessory 300. Figures 5c, 6a, 6b and 7 disclose a removable chip collector accessory 300 and this example will be discussed below.

The chip collector accessory 300 comprises a collecting mouth 302. The collecting mouth 302 is arranged to be mounted adjacent to the cutting tool bit 186 when mounted to the sub-base adapter 162. This is best shown in Figure 7 whereby the collecting mouth 302 is offset from the longitudinal axis B-B of the router 100 in a direction parallel with the base portion 106. The amount the collecting mouth 302 is offset will depend on the cutting tool bit 186. In some examples, the collecting mouth 302 is offset from the longitudinal axis B-B of the router 100 by at least the radius of the cutting tool bit 186. This means that large chips will be immediately caught by the collecting mouth 302 when ejected tangentially from the cutting tool bit 186. The tangential direction of the chips is indicated in Figure 5c.

In certain examples, the chip collector accessory 300 may optionally include a guide wall 314 arranged tangentially to the base aperture 126 in the base portion 106. Alternatively, if the chip collector accessory 300 is mounted to the sub-base adapter 162, the guide wall 314 is arranged tangentially to the sub-base adapter hole 128 as shown in Figure 5c. The guide wall 314 is arranged to receive chips ejected from the cutting tool bit 186 and then guide the chips towards the collection chamber 304. The guide wall 314 may thus further enhance the efficiency of the chip collection process, by directing chips towards the collection chamber 304 in a controlled and effective manner.

The collecting mouth 302 also comprises a second wall 322. The second wall 322 is angled with respect to the guide wall 314 and creates a funneling shape towards the narrow chute portion 306. The second wall 322 comprises a curved shape, but the second wall 322 can be straight or have any required shape that narrows the collecting mouth 302 towards the narrow chute portion 306.

In addition, in some examples, collecting mouth 302 also comprises a floor 324. The floor 324 is best shown in Figure 7 which shows the floor 324 of the collecting mouth 302 curved towards the second base side 160. In this way, the floor 324, the second wall 322 and the guiding wall 314 are shaped to provide a funneling action towards the narrowing chute portion 306 and the collection chamber 304.

The collecting mouth 302 may be optionally designed to circumscribe a portion of the sub-base adapter hole 128 of the sub-base adapter 162. Alternatively, the collecting mouth 302 may be designed to circumscribe a portion of the base aperture 126 of the base portion 106. The arrangement as shown in Figure 5c shows that the collecting mouth 302 circumferentially surrounds a portion of the sub-base adapter hole 128. In some other examples, the collecting mouth 302 circumferentially surrounds up to half of the sub-base adapter hole 128. That is the width D of the collecting mouth 302 is equal to the diameter of the sub-base adapter hole 128. However, the collecting mouth 302 is mounted to the sub-base adapter 162 or the base portion 106 such that the chip collector accessory 300 does not interfere with the cutting tool bit 186 engaging with the workpiece.

The collecting mouth 302 is configured to extend in a direction parallel to a rotation axis of the cutting tool bit 186 away from the base portion 106. This is best shown in Figures 6a and 6b. That is the collecting mouth 302 extends in a direction away from the second base side 160. Additionally, the collecting mouth 302 may be configured to extend a distance greater than the distance that the cutting tool bit 186 projects out of the base aperture 126 of the base portion 106 when the user plunges the router 100.

The chip collector accessory 300 also includes a collection chamber 304. The collection chamber 304 is configured to receive chips collected in the collecting mouth 302. The collection chamber 304 is arranged to prevent the chips deflecting back towards the collecting mouth 302 and the cutting tool bit 186.

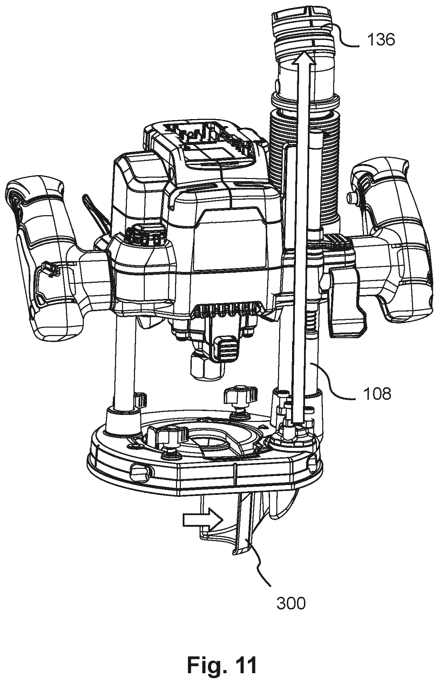

The dust extraction conduit 136 is in fluid communication with the collection chamber 304 of the chip collector accessory 300, allowing for effective removal of chips from the cutting area. The collection chamber 304 is connected to the dust extraction conduit 136 via the first guide post conduit 138. In this way an airflow path is created by the vacuum source from the collection chamber 304 via the first guide post conduit 138 to the dust extraction conduit 136. The airflow pathway is indicated in Figures 7 and 11 with a series of arrows. Figure 11 shows a perspective view of the router 100.

In some examples, at least a portion of the collection chamber 304 is aligned with a longitudinal axis C-C of the airflow pathway extending through the first guide post 108 and the dust extraction conduit 136. That is, the first guide post 108, the dust extraction conduit 136 and the collection chamber 304 are all aligned along the longitudinal axis C-C of the airflow pathway. This means that the airflow from the collection chamber 304 is more efficient and more chips are entrained in the airflow from the vacuum source. In some examples a centre 338 of the collection chamber 304 is aligned with longitudinal axis C-C of the airflow pathway.

This means that the chips trapped by the collection chamber 304 are entrained in the air flow and removed from the workpiece and cutting tool bit 186.

In some examples, the collecting mouth 302 and the collection chamber 304 are connected via a narrowing chute portion 306. The narrowing chute portion 306 functions to connect the collecting mouth 302 to the collection chamber 304. This arrangement may facilitate the one-way transfer of chips from the collecting mouth 302 into the collection chamber 304. At the same time, the narrowing chute portion 306 minimizes deflecting chips returning to the collecting mouth 302.

In some examples, the collection chamber 304 may comprise a blocking wall 308. The blocking wall 308 provides a physical barrier which is adapted to prevent chips from returning to the collecting mouth 302. In some examples, the blocking wall 308 may be contiguous with one or more walls defining the collection chamber 304 and may be formed integrally therewith during the manufacturing process of the chip collector accessory 300.

Although not shown in the Figures, in some other examples, the collection chamber 304 may further comprise one or more guide structures or surfaces to direct the flow of chips toward the dust extraction conduit 136 or other suitable chip evacuation mechanism. The guide structures or surfaces may be formed integrally with the collection chamber 304, the blocking wall 308, or both, and may have a smooth or textured surface to facilitate the movement of chips along the guide structures or surfaces.

In yet another aspect, the collection chamber 304 may comprise one or more internal baffles, partitions, or separators configured to further segregate chips from the collecting mouth 302. The internal baffles, partitions, or separators may provide a labyrinthine air flow pathway within the collection chamber 304 to aid in preventing the deflection of chips back to the collecting mouth 302. The baffles, partitions, or separators may be arranged in a parallel, radial, or other suitable configuration to promote the efficient and effective collection of chips within the collection chamber 304. The baffles, partitions, or separators may be formed integrally with the collection chamber 304 or may be detachably mounted thereto, allowing for customization and adaptability to accommodate different cutting applications and chip properties.

The collecting mouth 302, chute portion 306 and collection chamber 304 may comprise a single piece or unitary component that is seamlessly integrated with one another. Alternatively, the collecting mouth 302, chute portion 306, and collection chamber 304 may be separate components that are connectable to one another or otherwise integrated into the chip collector accessory 300 to provide the desired efficient chip collection and transport functions described herein.

In some examples, the chip collector accessory 300 optionally comprises a toolless mounting arrangement for removably mounting the chip collector accessory 300 to the base portion 106 or alternatively the sub-base adapter 162. This allows for easy installation and removal of the chip collector accessory 300.

The toolless mounting arrangement configured for removably mounting the chip collector accessory 300 is best shown in Figures 6a and 6b. The chip collector accessory 300 comprises a first ledge 316 and a second ledge 318, which are configured to sandwich a lip portion 320 of the base portion 106 or a sub-base adapter 162 therebetween. The lip portion 320 can be seen in Figures 5a and 5b on the sub-base adapter 162 and the sub-base component 180 respectively without the chip collector accessory 300 mounted thereon.

The first ledge 316 and the second ledge 318 end around a portion of the periphery of the chip collection accessory 300. In some examples the first ledge 316 and the second ledge 318 extend along at least the second wall 322 and the guide wall 314. The first ledge 316 and the second ledge 318 extend around a narrow end 328 of the chip collector accessory 300. The narrow end 328 of the chip collector accessory 300 corresponds to the location of the collection chamber 304. The width of the first ledge 316 and the second ledge 318 are reduced at the narrow end 328 such that the first ledge 316 and the second ledge 318 do not protrude beyond the edge of the sub-base adapter 162 or the base portion 106.

In some examples, the first ledge 316 extends over the second base side 160 of the base portion 106 or the sub-base adapter 162 and the second ledge 318 extends over the first base side 158 of the base portion 106 or the sub-base adapter 162. As shown in Figures 6 and 6b, the first ledge 316 projects a greater distance than the second ledge 318.

The chip collector accessory 300 comprises a wedge shape with the collection chamber 304 at the narrow end 328 of the wedge and the collecting mouth 302 at the wide end of the wedge. The sub-base adapter 162 comprises a reciprocal wedge opening 326 for receiving the chip collector accessory 300. The base portion 106 may also comprise a reciprocal wedge opening (not shown) but this may require modification to the base portion 106. In a preferred example the sub-base adapter 162 comprises the reciprocal wedge opening 326. This means that since the sub-base adapter 162 is mountable to the base portion 106 of the router 100, the chip collection accessory 300 is retrofittable to the router 100. This setup ensures a secure connection between the chip collector accessory 300 and the base portion 106.

The chip collector accessory 300 is slidably engaged when mounted on the sub-base adapter 162. The user aligns the lip portion 320 between the first and second ledges 316, 318 and then slides the chip collector accessory 300 into the reciprocal wedge opening 326.

In order to ensure that the chip collector accessory 300 is securely mounted to the sub-base adapter 162, the chip collector accessory 300 can optionally comprise a securing mechanism. The securing mechanism is configured to provide positive engagement between the sub-base adapter 162 and the chip collection accessory 300.

In some examples, the chip collector accessory 300 comprises at least one deformable clip 310. In some examples the chip collector accessory 300 comprises a first deformable clip 310 on a first side 332 of the chip collector accessory 300 and a second deformable clip 330 on a second side 334 of the chip collector accessory 300.

In some examples, the first deformable clip 310 is configured to engage with a first reciprocal notch portion 312 in the sub-base adapter 162. The first reciprocal notch portion 312 is best shown in Figure 5a. In addition, similarly a second reciprocal notch portion 336 is also provided on the sub-base adapter 162. The second reciprocal notch portion 336 is configured to engage with the second deformable clip 330. The first and second deformable clips 310, 330 are configured to provide a snap-fit engagement with respectively the first and second reciprocal notch portions 312, 336. As shown in Figures 5a, 5b, the first and second reciprocal notch portions 312, 336 are positioned in the reciprocal wedge opening 326. Accordingly, when the first and second deformable clips 310, 330 are in engagement with the first and second reciprocal notch portions 312, 336, the chip collector accessory 300 is fixed with respect to the sub-base adapter 162.

The user can insert and remove the chip collector accessory 300 by squeezing the first side 332 and the second side 334 of the chip collection accessory 300 together. This moves the first and second deformable clips 310, 330 towards the middle of the chip collector accessory 300 and away from the first and second reciprocal notch portions 312, 336. Accordingly, when the first and second deformable clips 310, 330 are disengaged, the chip collector accessory 300 can be removed from the sub-base adapter 162. The user achieves this by sliding the chip collector accessory 300 towards the centre of sub-base adapter 162. The first and second ledges 316, 318 disengage from the lip portion 320 and the chip collector accessory 300 is fully detached from the sub-base adapter 162.

The first and second deformable clips 310, 330 are deformable in some examples due to the deformable material of the chip collector accessory 300. In some other examples, additionally or alternatively, the first and second deformable clips 310, 330 are deformable due to the structure of the chip collector accessory 300.

The chip collector accessory 300 optionally comprises a deformable wall 340 extending from the collecting mouth 302 to the collection chamber 304. A central void 342 is provided behind the deformable wall 340. This means that the deformable wall 340 is relatively thin and can deform if the user squeezes the deformable wall 340 towards the central void 342. The first deformable clip 310 is mounted on the deformable wall 340 and the movement of the first deformable clip 310 is due to the deformable wall 340 moving when the user squeezes the deformable wall 340. In some examples, only the first deformable clip 310 is deformable. In this example either the second deformable clip 330 is fixed and not deformable or is not provided.

This arrangement further assists in the secure and removable mounting of the chip collector accessory 300 to the base portion 106.

In some examples, the chip collector accessory 300 may be mountable to the base portion 106 in different orientations about the rotation axis of the cutting tool bit 186. This versatility may provide additional flexibility for the user, by enabling the chip collector accessory 300 to be optimally positioned relative to the cutting tool bit 186 based on the specific operational requirements of a particular routing application. In some examples, the rotation of the chip collector accessory 300 orientation with respect to the base portion 106 is achieved by mounting the sub-base adapter 162 in a different position on the base portion 106. Since the sub-base adapter 162 comprises four equally circumferentially spaced base fastener holes 170 in the sub-base adapter 162, the sub-base adapter 162 and the chip collector accessory 300 can be mounted in four different orientations with respect to the base portion 106

While specific examples of the chip collector accessory 300 have been described herein, it will be understood that various modifications and adaptations of these examples may be made without departing from the scope of the present disclosure. Accordingly, the chip collector accessory 300 may comprise various combinations of the components described above, as well as other components not explicitly disclosed, in order to achieve the desired performance characteristics for the particular application in question.

In another example, two or more examples are combined. Features of one example can be combined with features of other examples.

Examples of the present disclosure have been discussed with particular reference to the examples illustrated. However, it will be appreciated that variations and modifications may be made to the examples described within the scope of the disclosure.

## Claims

1. A router comprising:
a housing;
a motor mounted in the housing and operatively connected to a tool holder arranged to hold a cutting tool bit;
wherein the housing comprises a base portion; and
a sub-base mountable to the base portion, the sub-base comprising a sub-base adapter configured to receive a first guide bushing and a second guide bushing wherein the first guide bushing is a different type from the second guide bushing.

2. The router according to claim 1 wherein the router comprises a first bushing mounting arrangement arranged to mount the first guide bushing to the base portion.

3. The router according to claims 1 or 2 wherein the router comprises a second bushing mounting arrangement arranged to mount the second guide bushing to the base portion.

4. The router according to claim 3 when dependent on claim 2 wherein the first and second bushing mounting arrangements are different.

5. The router according to claim 4 wherein the first bushing mounting arrangement is at a first position on the sub-base adapter and the second bushing mounting arrangement is at a second position on the sub-base adapter.

6. The router according to claim 2 wherein the first bushing mounting arrangement comprises clamping the sub-base adapter between a bushing locking ring engageable with a protruding portion of the first guide bushing projecting through the sub-base adapter.

7. The router according to claim 6 wherein the first bushing mounting arrangement comprises a first bushing recess on a first side of the sub-base adapter configured to receive the bushing locking ring and a second bushing recess on a second side of the sub-base adapter configured to receive a portion of the first guide bushing.

8. The router according to claim 7 wherein the second bushing recess is configured to receive a radially protruding shoulder portion of the first guide bushing.

9. The router according to claim 3 wherein the second bushing mounting arrangement comprises at least one bushing fastener hole in the sub-base adapter wherein the at least one bushing fastener hole is configured to receive at least one bushing screw fastener when the second guide bushing is mounted to the router.

10. The router according to claim 9 wherein a second bushing recess on the second side of the sub-base adapter is configured to receive at least a portion of the second guide bushing and a head portion of the at least one bushing screw fastener when the at least one bushing screw is inserted into the at least one bushing fastener hole.

11. The router according to claim 10 wherein the at least a portion of the second guide bushing is a radially projecting flange portion of the second guide bushing.

12. The router according to claim 11 wherein the radially projecting flange portion of the second guide bushing is flush with a workpiece facing surface of the sub-base adapter.

13. The router according to any of claims 9 to 12 wherein the at least one fastener hole is configured to receive the at least one bushing screw fastener when the second guide bushing is not mounted to the router.

14. The router according to any of the preceding claims wherein the sub-base adapter is removeably mountable to the base portion.

15. The router according to claim 14 wherein the sub-base adapter is mountable to the base portion with a plurality of screw fasteners.

16. The router according to any of the preceding claims wherein the first guide bushing and the second guide bushing comprise different heights in a direction along a longitudinal axis of the router when mounted on the router.

17. A router assembly comprises a router according to any of the claims 1 to 16 and a first guide bushing and a second guide bushing.

18. A sub-base mountable to the base portion of a housing of a router, the sub-base comprising a sub-base adapter comprising a first mounting arrangement configured to receive a first guide bushing and a second mounting arrangement configured to receive second guide bushing wherein the first guide bushing is a different type from the second guide bushing.
